# EUROPÄISCHE PATENTSCHRIFT

(11) **EP 3 687 842 B1**
(45) Veröffentlichungstag und Bekanntmachung des Hinweises auf die Patenterteilung: **01.11.2023**
(21) Anmeldenummer: 18773370.4
(22) Anmeldetag: 12.09.2018
(51) Int. Cl.: B60H 1/00, G01K 1/02, B60K 37/06, G01K 13/02, G01K 13/024

(54) **VORRICHTUNG ZUM BETREIBEN EINER KFZ-KLIMAANLAGE UND INNENRAUMTEMPERATURFÜHLEREINHEIT FÜR EINE DERARTIGE KLIMAANLAGE**
DEVICE FOR OPERATING A MOTOR VEHICLE AIR CONDITIONING SYSTEM AND INTERIOR TEMPERATURE SENSOR UNIT FOR SUCH AN AIR CONDITIONING SYSTEM
DISPOSITIF POUR FAIRE FONCTIONNER UN SYSTÈME DE CLIMATISATION DE VÉHICULE À MOTEUR ET UNITÉ SONDE DE TEMPÉRATURE D'HABITACLE POUR SYSTÈME DE CLIMATISATION DE CE TYPE

(30) Priorität: 27.09.2017 DE 102017122469
(43) Veröffentlichungstag der Anmeldung: 05.08.2020
(73) Patentinhaber: Behr-Hella Thermocontrol GmbH, 59557 Lippstadt (DE)
(72) Erfinder: TRAPP, Ralph, 33106 Paderborn (DE); NAGEL, Dirk, 33102 Paderborn (DE); SCHMIDT, Rüdiger, 33100 Paderborn (DE); KUHLHOFF, Bernd, Lippstadt 59555 (DE); PANKRATZ, Eduard, 59510 Lippetal (DE)
(74) Vertreter: dompatent von Kreisler Selting Werner - Partnerschaft von Patent- und Rechtsanwälten mbB
(86) Internationale Anmeldenummer: PCT/EP2018/074574
(87) Internationale Veröffentlichungsnummer: WO 2019/063287

(56) Entgegenhaltungen:
- DE-A1-102006 023 182
- DE-B3- 10 232 352
- FR-A1- 2 728 514
- JP-A- H07 149 136
- US-A- 4 972 099
- US-A1- 2016 347 151

## Beschreibung

Die Erfindung betrifft eine Vorrichtung zum Betreiben einer Heizungs-, Lüftungs- und/oder Klimaanlage eines Fahrzeugs sowie eine Innenraumtemperaturfühlereinheit für eine derartige Heizungs-, Lüftungs- und/oder Klimaanlage.

Typischerweise erfolgt die Regelung einer Heizungs-, Lüftungs- und/oder Klimaanlage eines Fahrzeugs in und über ein im Fahrzeug verbautes Steuergerät, insbesondere Klimasteuergerät, bei dem es sich um ein von anderen Steuergeräten getrenntes Gerät handelt. Für die Regelung werden typischerweise verschiedene Sensorgrößen benötigt, und zwar beispielsweise bezüglich der Innenraumtemperatur sowie der aktuellen Betriebszustände verschiedener Komponenten der Klimaanlage und der Fahrzeugumgebung (beispielsweise Außentemperatur, Sonneneinstrahlung etc.).

Beispiele für Vorrichtungen zur Steuerung einer Klimaanlage und/oder mehrerer Fahrzeugkomponenten sind aus DE-A-199 41 951, DE-B-10 2008 064 011 und EP-A-1 080 956 bekannt.

FR-A-2728514 beschreibt eine Heizungs-, Lüftungs- und/oder Klimaanlage eines Fahrzeugs, bei der einer Bedieneinheit der Klimaanlage durch eine Verarbeitungseinrichtung Signale zugeführt werden, mit denen die Aktuatorik der Klimaanlage angesteuert wird. Bei dieser Bedieneinheit handelt es sich um das klassische Klimasteuergerät in Fahrzeugen, das typischerweise zusätzlich zu anderen Steuergeräten zum Betreiben und Steuern anderer Fahrzeugkomponenten im Innenraum des Fahrzeuges verbaut ist.

DE-A-10 2006 023 182 beschreibt eine Sensoranordnung zum Erfassen von Kennwerten der Umgebung eines Fahrzeugs. Die Sensoren liefern an eine Auswerteeinheit Messsignale, wobei die Auswerteeinheit dann Ansteuersignale für die Aktuatorik der Klimaanlage zur Verfügung stellt.

In den letzten Jahren hat sich bei Fahrzeugen der Trend durchgesetzt, mehrere verschiedene Fahrzeugkomponenten über ein gemeinsames Steuergerät zu bedienen, wobei dieses gemeinsame Steuergerät auch die Verrechnung der für die diversen Fahrzeugkomponenten erforderlichen Sensorgrößen übernimmt (siehe z.B. US-A-2016/0347151). Die Konzentration der Software zur Ansteuerung der diversen Fahrzeugkomponenten hat hinsichtlich der Gestehungskosten insoweit Vorteile, als die für die Ansteuerung der Fahrzeugkomponenten erforderliche Rechenleistung in einem oder einigen wenigen Prozessoren konzentriert werden kann.

Während der Entwicklungsphase allerdings bereitet die Vereinigung mehrerer Softwarefunktionen für eine Vielzahl von Fahrzeugkomponenten in einem Steuergerät insoweit Probleme, als Softwareaktualisierungen unter mehreren Kfz-Zulieferern, die die einzelnen von dem zentralen Steuergerät zu steuernden Komponenten zuliefern, abgestimmt werden muss. Diese Abstimmung kann zu Verzögerungen bei der Entwicklung der Software beispielsweise für die Klimaregelung eines Fahrzeugs führen.

Aufgabe der Erfindung ist es, eine Konzeption für eine Vorrichtung zum Betreiben einer Heizungs-, Lüftungs- und/oder Klimaanlage eines Fahrzeugs zu schaffen, bei der trotz Integration der Bedienung der Heizungs-, Lüftungs- und/oder Klimaanlage zusammen mit der Bedienung anderer Komponente in einem zentralen Steuergerät dennoch für die Entwicklung der Software vermehrt Freiheitsgrade existieren.

Zur Lösung dieser Aufgabe wird mit der Erfindung eine Vorrichtung gemäß Anspruch 1 zum Ansteuern und zum Betreiben einer Heizungs-, Lüftungs- und/oder Klimaanlage eines Fahrzeugs und weiterer Fahrzeugkomponenten, wobei die Heizungs-, Lüftungs- und/oder Klimaanlage versehen ist unter anderem mit
- einem Gebläse,
- mehreren Stellmotoren zur Ansteuerung von Klappen an und/oder in Luft in das Fahrzeug leitenden Kanälen,
- einem Heiz- und/oder einem Kühlaggregat,
- mehreren ersten Sensoren zur Erfassung von für den Betrieb der Heizungs-, Lüftungs- und/oder Klimaanlage erforderlichen Messgrößen und
- mindestens einem zweiten Sensor als Innenraumtemperaturfühler zur Erfassung einer die Innenraumtemperatur des Fahrzeugs repräsentierenden Istgröße,
- wobei die Vorrichtung versehen ist mit
   - einer Bedien- und Ansteuereinheit zur
      - Eingabe unter anderem einer Solltemperatur für den Innenraum des Fahrzeugs,
      - Eingabe von Parametern und Bedienbefehlen für den Betrieb der Heizungs-, Lüftungs- und/oder Klimaanlage und der weiteren Fahrzeugkomponenten,
      - Ausgabe von Klimasteuersignalen für die Ansteuerung des Gebläses, der Stellmotoren und des Heiz- und/oder des Kühlaggregats der Heizungs-, Lüftungs- und/oder Klimaanlage und
      - Ermittlung und Ausgabe von Komponentensteuersignalen für die Ansteuerung der weiteren Fahrzeugkomponenten, und
   - einer außerhalb der und getrennt von der Bedien- und Ansteuereinheit angeordneten, mit der Bedien- und Ansteuereinheit verbundenen Verarbeitungseinheit, wobei die Verarbeitungseinheit (40) den mindestens einen Innenraumtemperaturfühler aufweist und Messsignale von mindestens einigen der ersten Sensoren der Heizungs-, Lüftungs- und/oder Klimaanlage erhält und diese Messsignale sowie Messsignale von dem mindestens einen Innenraumfühler (26) weiterverarbeitet zu Klimasteuersignalen, welche die Bedien- und Ansteuereinheit zwecks Ansteuerung des Gebläses, der Stellmotoren und/oder des Heiz- und/oder des Kühlaggregats oder welche die Bedien- und Ansteuereinheit (32) zur Weiterverarbeitung zwecks Ansteuerung der des Gebläses, der Stellmotoren und/oder des Heiz- und/oder des Kühlaggregats der Heizungs-, Lüftungs- und/oder Klimaanlage erhält.

Ferner dient zur Lösung der obigen Aufgabe erfindungsgemäß eine Innenraumtemperaturfühlereinheit gemäß Anspruch 5.

Die Erfindung ist sinngemäß in der Auftrennung der Funktionen der Heizungs-, Lüftungs- und/oder Klimaregelung bzw. -steuerung auf eine Bedien- und Ansteuereinheit für eine Vielzahl von Fahrzeugkomponenten, unter anderem auch für die Heizungs-, Lüftungs- und/oder Klimaanlage, und eine extern dazu angeordnete Verarbeitungseinheit zu sehen. Diese Verarbeitungseinheit ist erfindungsgemäß dem Innenraumtemperaturfühler zugeordnet und ist mit diesem in einer Baueinheit zusammengefasst. Die Verarbeitungseinheit empfängt Signale von anderen Sensoren der Heizungs-, Lüftungs- und/oder Klimaanlage, deren Messgrößen für die Regelung/Steuerung erforderlich sind.

Erfindungsgemäß wird also zumindest ein Teil der Klimaregelungsfunktionen aus der zentralen, mehreren Fahrzeugkomponenten zugeordneten Bedien- und Ansteuereinheit heraus in den Innenraumtemperaturfühler, d.h. in eine diesem zugeordnete Verarbeitungseinheit, verlagert. Diese Funktionen bilden zusammen insbesondere die Klimakernfunktionen wie die Bewertung der (insbesondere gesamten) Sensorik und die Berechnung der notwendigen Luftmenge, Lufttemperatur sowie des dafür notwenigen Heiz- bzw. Kühlbedarfs.

Zum wesentlichen Teil der Klimakernfunktionen gehört unter anderem auch die Berechnung der Stellgrößen für die Aktuatorik der Heizungs-, Lüftungs- und/oder Klimaanlage, wie beispielsweise die Stellgrößen für die Stellmotoren der Klappen an und/oder in den Luft in das Fahrzeug leitenden Kanälen, für das Gebläse und für das Heiz- und/oder das Kühlaggregat. Diese werden letztendlich aus den Bedarfsanforderungen an die Luftmengen, die Lufttemperaturen, die Luftverteilung, die Heizleistungen und die Kühlleistungen berechnet. Dadurch wird nun in der dezentral angeordneten Verarbeitungseinheit nicht nur die Innenraumtemperatur aufbereitet, sondern auch eine ganze Reihe von weiteren Klimaregelungsfunktionen durchgeführt. Um diese Funktionen berechnen zu können, werden der Verarbeitungseinheit die benötigten Informationen beispielsweise über eine Bus-Kommunikation zur Verfügung gestellt. Die Ergebnisse der Berechnung werden wiederum über die Bus-Kommunikation an weitere Steuergeräte und insbesondere an die Bedien- und Ansteuereinheit weitergegeben, die damit die verschiedene Aktuatorik der Heizungs-, Lüftungs- und/oder Klimaanlage bedienen kann.

Der Vorteil der erfindungsgemäß vorgesehenen Auftrennung der Klimafunktionen auf die Ansteuerung der Klimaanlage durch die zentrale Bedien- und Ansteuereinheit sowie der Berechnung der Stellgrößen für die Klimaanlagensteuerung auf eine dezentral dazu angeordnete Verarbeitungseinheit besteht in der Flexibilität bei der Softwareentwicklung für die Heizungs-, Lüftungs- und/oder Klimaanlage. Es müssen zuvor die Schnittstellen zwischen Verarbeitungseinheit bzw. Innenraumtemperaturfühler einerseits und der zentralen Bedien- und Ansteuereinheit definiert werden. Die Verbindung erfolgt hierbei zweckmäßigerweise über eine Standardbus-Kommunikation wie beispielsweise CAN. Softwareänderungen zur Ermittlung der über diese Bus-Kommunikationsschnittstelle zu übermittelnden Signale und Daten für die Ansteuerung der Klimaanlage erfordern nunmehr keine Änderung der Software zum Betrieb der zentralen Bedien- und Ansteuereinheit, was für den Softwareentwickler insoweit eine zusätzliche Flexibilität bedeutet.

In vorteilhafter Ausgestaltung der Erfindung kann vorgesehen sein, dass die ersten Sensoren mit der Bedien- und Ansteuereinheit verbunden sind und ihre Messsignale an diese liefern, wobei die Bedien- und Ansteuereinheit diese Messsignale repräsentierende Daten an die Verarbeitungseinheit liefert. Die verschiedenen Sensoren für den Betrieb der Klimaanlage sind bei dieser Variante der Erfindung mit der zentralen Bedien- und Ansteuereinheit verbunden. Dies gilt nicht für den mindestens einen Innenraumtemperaturfühler. Die weiteren Sensoren (erste Sensoren) sind verschiedener Natur und Hardware und liefern zum Teil analoge Messsignale, zum Teil aber auch digitalisierte Messsignale. Sie können für unterschiedliche Funktionen verwendet werden. So kann beispielsweise der Außentemperatursensor, der typischerweise für den Betrieb einer Klimaanlage benötigt wird, auch dazu genutzt werden, um dem Fahrer im Winter die Unterschreitung einer Mindesttemperatur anzuzeigen. Aber auch ganz grundsätzlich ist es heute üblich, dass in der Instrumententafel eines Fahrzeugs die Außentemperatur angezeigt wird. Die Messsignale dieser ersten Sensoren werden vorteilhafterweise in der Bedien- und Ansteuereinheit umgesetzt, um dann über beispielsweise einen Bus (CAN- oder LIN-Bus) an die externe Verarbeitungseinheit übermittelt zu werden. Zusammen mit dem Messsignal des mindestens einen Innenraumtemperaturfühlers werden dann in der Verarbeitungseinheit die für den Betrieb der Klimaanlage erforderlichen Stellgrößen ermittelt und diese Daten ebenfalls wiederum über die Bus-Kommunikationsverbindung von der Verarbeitungseinheit an die Ansteuer- und Bedieneinheit übertragen, von wo aus sie den einzelnen Komponenten der Klimaanlage zugeführt werden, um diese entsprechend anzusteuern.

Was den Typ des Innenraumtemperaturfühlers anbelangt, so kann dieser belüftet oder unbelüftet sein. Ein belüfteter Innenraumtemperaturfühler erfordert neben dem temperatursensitiven Element auch noch einen Belüftungsmotor (siehe bspw. DE 299 21 008 U1, DE 198 24 050 C1 und DE 197 38 667 C1). In den letzten Jahren werden zunehmend sogenannte unbelüftete Innenraumtemperaturfühler eingesetzt, die über mehrere unterschiedlich sensitive und für unterschiedliche Umgebungsparameter sensitive Elemente verfügen. Derartige unbelüftete Temperaturfühler weisen typischerweise zwei temperatursensitive Messelemente sowie ein strahlungssensitives Element auf, das die Erwärmung des unbelüfteten Innenraumtemperaturfühlers infolge von Wärme- bzw. Sonnenstrahlung erfasst. Die Messsignale dieser drei Elemente werden miteinander verrechnet, um ein die Temperatur im Innenraum des Fahrzeugs repräsentierendes Signal zu erzeugen, das als Innenraumtemperatur-Istwert der Regelung der Klimaanlage zugeführt wird (siehe bspw. EP 1 457 365 B1).

In weiterer zweckmäßiger Ausgestaltung der Erfindung können die ersten Sensoren umfassen: mindestens einen Ausblassensor zur Erfassung der Temperatur der aus mindestens einem der Kanäle ausströmenden Luft und/oder mindestens einen Sonnensensor zur Erfassung der Sonnenstrahlung, der der Innenraum ausgesetzt ist, und/oder mindestens einen Feuchtesensor zur Erfassung der relativen Luftfeuchtigkeit der insbesondere an eine Scheibe, insbesondere die Frontscheibe des Fahrzeugs, gelangenden Luft und/oder mindestens einen Außentemperatursensor zur Erfassung der Temperatur der Umgebung des Fahrzeugs und/oder einen Sensor zur Erfassung der Temperatur eines Heiz-Aggregats der Klimaanlage und/oder einen Sensor zur Erfassung der Temperatur eines Kühl-Aggregats der Klimaanlage.

Die Erfindung wird nachfolgend anhand eines Ausführungsbeispiels sowie unter Bezugnahme auf die Zeichnung näher erläutert. Im Einzelnen zeigen dabei:
- Fig. 1: schematisch einen Teil eines Fahrzeugs mit einigen Komponenten einer Klimaanlage und
- Fig. 2: schematisch die Auftrennung der Klimafunktionen auf eine zentrale Bedien- und Ansteuereinheit sowie auf eine dezentrale Verarbeitungseinheit.

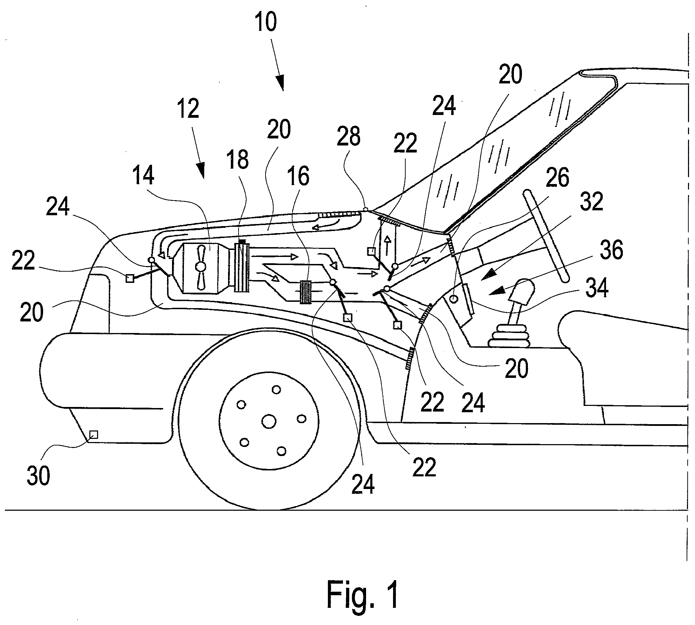

Fig. 1 zeigt in Seitenansicht und schematisch den vorderen Teil eines Fahrzeugs 10 mit einer Klimaanlage 12. Die Klimaanlage 12 umfasst unter anderem ein Gebläse 14, ein Heizaggregat 16, ein Kühlaggregat 18, mehrere Luftzuführkanäle 20 mit Stellmotoren 22 für Klappen 24, und eine Sensorik mit beispielsweise einem Innenraumtemperaturfühler 26, einem Sonnensensor 28 und einem Außentemperaturfühler 30. Der Innenraumtemperaturfühler 26 kann ein oder mehrere Temperatursensoren aufweisen, die in ihrer Gesamtheit der Ermittlung einer die Temperatur im Innenraum repräsentierenden Istgröße dienen.

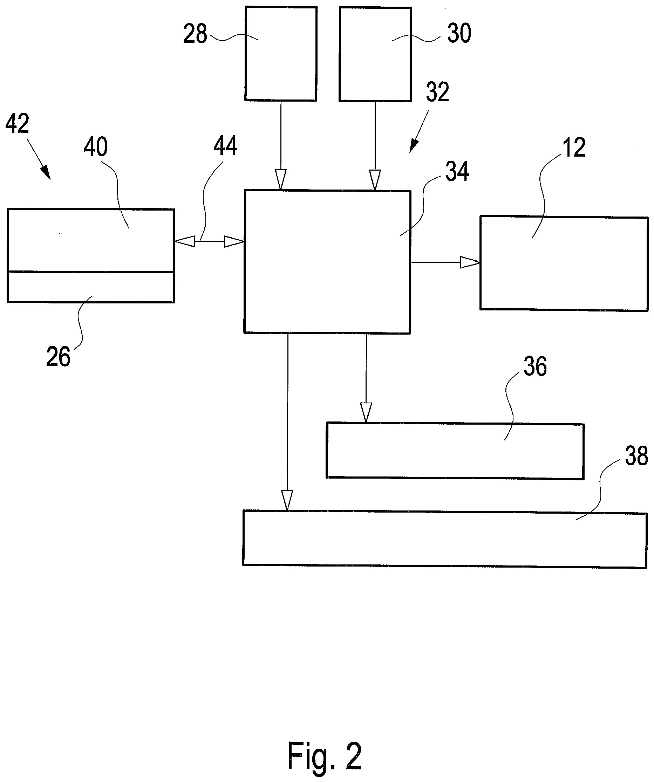

In der Instrumententafel bzw. in der Mittelkonsole des Fahrzeugs 10 verbaut ist eine zentrale Bedien- und Ansteuereinheit 32 mit beispielsweise einem Touch Screen 34. Die Bedien- und Ansteuereinheit 32 dient der Ansteuerung der Aktuatorik der Klimaanlage 12 und z.B. einem Navigationssystem 36 und ferner der Verstellung und/oder Temperierung (Heizung bzw. Belüftung) der Sitze (siehe bei 38 in Fig. 2). Weitere Komponenten wie beispielsweise ein Infotainmentsystem oder eine Schiebedachvorrichtung bzw. automatische Dachöffnungs- und -schließanlage (im Falle eines Cabriolets) können ebenfalls über die zentrale Bedien- und Ansteuereinheit 32 gesteuert werden.

Erfindungsgemäß ist nun ein Teil der Klimaregelfunktionen aus der Bedien- und Ansteuereinheit 32 nach extern ausgelagert. Erfindungsgemäß befindet sich eine dezentrale Verarbeitungseinheit 40 mit dem Innenraumtemperaturfühler 26 zusammengefasst in einer separaten Baueinheit 42, die über eine Bus-Kommunikation 44 mit der zentralen Bedien- und Ansteuereinheit 32 kommuniziert. Der Verarbeitungseinheit 40 können dabei über ebenfalls vorzugsweise eine Bus-Kommunikation die Messdaten anderer Klimasensoren wie beispielsweise des Sonnensensors 28 bzw. des Außentemperaturfühlers 30 oder aber auch des Motorwassertemperaturfühlers, des Ausblassensors, des Feuchtigkeitssensors, des Heizaggregat- d.h. Wärmetauschertemperatursensors, des Kühlaggregat- d.h. Verdampfertemperatursensors (im Einzelnen nicht gezeigt sondern durch die Punkte zwischen 28 und 30 in Fig. 2 angedeutet) zugeführt werden. Die zuvor genannten Sensoren und gegebenenfalls weitere Sensoren (mit Ausnahme des Innenraumtemperaturfühlers 26) liefern ihre Messsignale bzw. Messdaten an die zentrale Bedien- und Ansteuereinheit 32, in der diese Signale umgesetzt werden, um über die Bus-Kommunikationsleitung 44 an die Verarbeitungseinheit 40 übertragen zu werden. Zusammen mit dem Messsignal des Innenraumtemperaturfühlers 26 errechnet dann die Verarbeitungseinheit 40 die Stellgrößen für die einzelnen Komponenten der Klimaanlage 12, wie beispielsweise das Gebläse 14, das Heizaggregat 16, das Kühlaggregat 18 und die diversen Luftverteilklappen 24 bzw. auch eine zentrale Mischklappe. Diese Stellgrößen werden über die Bus-Kommunikationsleitung 44 an die zentrale Bedien- und Ansteuereinheit 32 zurückgeschickt, von wo aus sie an die entsprechenden Komponenten der Klimaanlage 12 übertragen werden.

### BEZUGSZEICHENLISTE

10 Fahrzeug
12 Klimaanlage
14 Gebläse
16 Heizaggregat
18 Kühlaggregat
20 Luftzuführkanäle
22 Stellmotoren
24 Klappen
26 Innenraumtemperaturfühler
28 Sonnensensor
30 Außentemperaturfühler
32 Ansteuereinheit
34 Screen
36 Navigationssystem
40 Verarbeitungseinheit
42 Baueinheit
44 Bus-Kommunikation

## Patentansprüche

1. Vorrichtung zum Ansteuern und zum Betreiben einer Heizungs-, Lüftungs- und/oder Klimaanlage eines Fahrzeugs und weiterer Fahrzeugkomponenten, wobei die Heizungs-, Lüftungs- und/oder Klimaanlage versehen ist unter anderem mit
- einem Gebläse (14),
- mehreren Stellmotoren (22) zur Ansteuerung von Klappen (24) an und/oder in Luft in das Fahrzeug (10) leitenden Kanälen,
- einem Heiz- und/oder einem Kühlaggregat (16,18),
- mehreren ersten Sensoren (28,30) zur Erfassung von für den Betrieb der Heizungs-, Lüftungs- und/oder Klimaanlage erforderlichen Messgrößen und
- mindestens einem zweiten Sensor als Innenraumtemperaturfühler (26) zur Erfassung einer die Innenraumtemperatur des Fahrzeugs (10) repräsentierenden Istgröße,
- wobei die Vorrichtung versehen ist mit
- einer Bedien- und Ansteuereinheit (32) zur
- Eingabe unter anderem einer Solltemperatur für den Innenraum des Fahrzeugs (10),
- Eingabe von Parametern und Bedienbefehlen für den Betrieb der Heizungs-, Lüftungs- und/oder Klimaanlage und der weiteren Fahrzeugkomponenten (36,38),
- Ausgabe von Klimasteuersignalen für die Ansteuerung des Gebläses (14), der Stellmotoren (22) und des Heiz- und/oder des Kühlaggregats (16,18) der Heizungs-, Lüftungs- und/oder Klimaanlage und
- Ermittlung und Ausgabe von Komponentensteuersignalen für die Ansteuerung der weiteren Fahrzeugkomponenten, und
- einer außerhalb der und getrennt von der Bedien- und Ansteuereinheit (32) angeordneten, mit der Bedien- und Ansteuereinheit (32) verbundenen Verarbeitungseinheit (40)
- wobei die Verarbeitungseinheit (40) den mindestens einen Innenraumtemperaturfühler (26) aufweist und Messignale von mindestes einigen der ersten Sensoren (28,30) der Heizungs-, Lüftungs- und/oder Klimaanlage erhält und diese Messsignale sowie Messignale von dem mindestens einen Innenraumtemperaturfühler (26) weiterverarbeitet zu Klimasteuersignalen, welche die Bedien- und Ansteuereinheit (32) zwecks Ansteuerung des Gebläses (14), der Stellmotoren (22) und/oder des Heiz- und/oder des Kühlaggregats (16,18) erhält oder welche die Bedien- und Ansteuereinheit (32) zur Weiterverarbeitung zwecks Ansteuerung des Gebläses (14), der Stellmotoren (22) und/oder des Heiz- und/oder des Kühlaggregats (16,18) der Heizungs-, Lüftungs- und/oder Klimaanlage erhält.

2. Vorrichtung nach Anspruch 1, **dadurch gekennzeichnet, dass** die ersten Sensoren (28,30) mit der Bedien- und Ansteuereinheit (32) verbunden sind und ihre Messsignale an diese liefern, wobei die Bedien- und Ansteuereinheit (32) diese Messsignale repräsentierende Daten an die Verarbeitungseinheit (40) liefert.

3. Vorrichtung nach Anspruch 1 oder 2, **dadurch gekennzeichnet, dass** der mindestens eine Innenraumtemperaturfühler (26) belüftet ist oder dass der mindestens eine Innenraumtemperaturfühler (26) unbelüftet ist und zwei temperatursensitive Messelemente sowie ein Sonnenstrahlung erfassendes strahlungssensitives Element aufweist.

4. Vorrichtung nach einem der Ansprüche 1 bis 3, **dadurch gekennzeichnet, dass** die ersten Sensoren (28,30) mindestens einen Ausblassensor zur Erfassung der Temperatur der aus mindestens einem der Kanäle ausströmenden Luft und/oder mindestens einen Sonnensensor zur Erfassung der Sonnenstrahlung, der der Innenraum ausgesetzt ist, und/oder mindestens einen Feuchtesensor zur Erfassung der relativen Luftfeuchtigkeit der insbesondere an eine Scheibe, insbesondere die Frontscheibe des Fahrzeugs, gelangenden Luft und/oder mindestens einen Außentemperatursensor zur Erfassung der Temperatur der Umgebung des Fahrzeugs und/oder einen Sensor zur Erfassung der Temperatur eines Heiz-Aggregats der Klimaanlage und/oder einen Sensor zur Erfassung der Temperatur eines Kühl-Aggregats der Klimaanlage aufweist.

5. Innenraumtemperaturfühlereinheit für eine Heizungs-, Lüftungs- und/oder Klimaanlage eines Fahrzeugs, die eine Vorrichtung zum Ansteuern und Betreiben der Anlage sowie einer Aktuatorik aufweist, mit
- mindestens einem und vorzugsweise mehreren Innenraumtemperaturfühlern (26) zur Ermittlung einer die Innenraumtemperatur des Fahrzeugs (10) repräsentierenden Größe und
- einer außerhalb der und getrennt von der Vorrichtung zum Ansteuern und Betreiben der Heizungs-, Lüftungs- und/oder Klimanalage angeordneten Verarbeitungseinheit (40), die den mindestens einen Innenraumtemperaturfühler (26) aufweist und Messsignale von dem oder von den Innenraumtemperaturfühlern (26) sowie Messsignale von anderen Sensoren (28,30) der Heizungs-, Lüftungs- und/oder Klimaanlage erhält und die Signale für die Ansteuerung der Aktuatorik der Heizungs-, Lüftungs- und/oder Klimaanlage zur Übertragung an die Vorrichtung zum Ansteuern und Betreiben der Heizungs-, Lüftungs- und/oder Klimaanalage zwecks Ansteuerung der Aktuatorik der Heizungs-, Lüftungs- und/oder Klimaanlage bereitstellt, wobei die Ansteuereinheit (32) zusätzlich zu dieser Aktuatorik auch noch andere Fahrzeugkomponenten als die Heizungs-, Lüftungs-, und/oder Klimaanlage des Fahrzeugs ansteuert.

6. Innenraumtemperaturfühlereinheit nach Anspruch 5, **dadurch gekennzeichnet, dass** der mindestens eine Innenraumtemperaturfühler (26) belüftet ist oder dass der mindestens eine Innenraumtemperaturfühler (26) unbelüftet ist und zwei temperatursensitive Messelemente sowie ein Sonnenstrahlung erfassendes strahlungssensitives Element aufweist.

## Claims

1. A device for controlling and operating a vehicle heating, ventilation and/or air conditioning system and further vehicle components, the heating, ventilation and/or air conditioning system being provided inter alia with
- a blower (14),
- a plurality of actuating motors (22) for controlling flaps (24) at and/or in channels directing air into the vehicle (10),
- a heating and/or cooling aggregate (16, 18),
- a plurality of first sensors (28, 30) for sensing measuring variables necessary for the operation of the heating, ventilation and/or air conditioning system and
- at least one second sensor as an interior temperature sensor (26) for sensing an actual value representing the interior room temperature of the vehicle (10),
- wherein the device is provided with
- an operating and control unit (32) for
- the input of inter alia a set temperature for the interior of the vehicle (10),
- the input of parameters and operating commands for the operation of the heating, ventilation and/or air conditioning system and the further vehicle components (36, 38),
- the output of air condition control signals for controlling the blower (14), the actuating motors (22) and the heating and/or the cooling aggregate (16, 18) of the heating, ventilation and/or air conditioning system, and
- the determination and the output of component control signals for the control of the further vehicle components, and
- a processing unit (40) arranged outside of and separate from the operating and control unit (32) and connected with the operating and control unit (32),
- wherein the processing unit (40) comprises at least one interior temperature sensor (26) and receives measuring signals from at least some of the first sensors (28, 30) of the heating, ventilation and/or air conditioning system, the processing unit further processing these measuring signals and measuring signals from the at least one interior temperature sensor (26) into air conditioning control signals which are received by the operating and control unit (32) for controlling the blower (14), the actuating motors (22) and/or the heating and/or the cooling aggregate (16, 18) or which are received by the operating and control unit (32) for further processing for controlling the blower (14), the actuating motors (22) and/or the heating and/or the cooling aggregate (16, 18) of the heating, ventilation and/or air conditioning system.

2. The device of claim 1, **characterized in that** the first sensors (28, 30) are connected to the operating and control unit (32) and supply their measuring signals to the same, the operating and control unit (32) supplying data representing these measuring signals to the processing unit (40).

3. The device of claim 1 or 2, **characterized in that** the at least one interior temperature sensor (26) is vented or **in that** the at least one interior temperature sensor (26) is not vented and comprises two temperature-sensitive measuring elements, as well as a radiation-sensitive element sensing solar irradiation.

4. The device of one of claims 1 to 3, **characterized in that** the first sensors (28, 30) comprise at least one sensor for sensing the temperature of the air flowing from at least one of the channels and/or at least one sun sensor for sensing the solar irradiation the vehicle interior is exposed to and/or at least one humidity sensor for sensing the relative air humidity of the air reaching in particular a window, in particular the windshield of the vehicle, and/or at least one outside temperature for sensing the temperature of a heating aggregate of the air conditioning system and/or a sensor for sensing the temperature of a cooling aggregate of the air conditioning system.

5. An interior temperature sensor unit for a vehicle heating, ventilation and/or air conditioning system comprising an actuator system, comprising
- at least one and preferably a plurality of interior temperature sensors (26) for determining a variable representing the interior temperature of the vehicle (10) and
- a processing unit (40) arranged outside of and separate from the device for controlling and operating a vehicle heating, ventilation and/or air conditioning system, which processing unit comprises the at least one interior temperature sensor (26) and receives measuring signals from the interior temperature sensor or sensors (26), as well as data representing measuring signals from other sensors (28, 30) of the heating, ventilation and/or air conditioning system, and which processing unit provides signals for transmission to the device for controlling and operating a vehicle heating, ventilation and/or air conditioning system for the purpose of controlling the actuator system of the heating, ventilation and/or air conditioning system, the control unit (32) additionally also controlling other vehicle components of the heating, ventilation and/or air conditioning system of the vehicle.

6. The interior temperature sensor unit of claim 5, **characterized in that** the at least one interior temperature sensor (26) is vented or that the at least one interior temperature sensor (26) is not vented and comprises two temperature-sensitive measuring elements, as well as a radiation-sensitive element sensing solar irradiation.

## Revendications

1. Dispositif de pilotage et de fonctionnement d'un système de chauffage, ventilation et/ou climatisation d'un véhicule et d'autres composants de véhicule, le système de chauffage, ventilation et/ou climatisation étant entre autres muni
- d'un ventilateur (14),
- de plusieurs servomoteurs (22) destinés au pilotage de volets (24) sur et/ou dans des canalisations conduisant de l'air dans le véhicule (10),
- d'un groupe de chauffage et/ou d'un groupe de refroidissement (16, 18),
- de plusieurs premiers capteurs (28, 30) destinés à la capture de grandeurs de mesure nécessaires pour le fonctionnement du système de chauffage, ventilation et/ou climatisation, et
- d'au moins un deuxième capteur en tant que sonde de température de l'habitacle (26) destiné à la capture d'une grandeur effective représentant la température de l'habitacle du véhicule (10),
- le dispositif étant muni
- d'une unité de commande et de pilotage (32) destinée à
- l'entrée entre autres d'une température de consigne pour l'habitacle du véhicule (10),
- l'entrée de paramètres et d'instructions de commande pour le fonctionnement du système de chauffage, ventilation et/ou climatisation et des autres composants de véhicule (36, 38),
- l'émission de signaux de commande de climatisation pour le pilotage du ventilateur (14), des servomoteurs (22) et du groupe de chauffage et/ou du groupe de refroidissement (16, 18) du système de chauffage, ventilation et/ou climatisation, et
- la détermination et l'émission de signaux de commande de composants pour le pilotage des autres composants de véhicule, et
- d'une unité de traitement (40), disposée à l'extérieur de et séparément de l'unité de commande et de pilotage (32) et raccordée à l'unité de commande et de pilotage (32),
- l'unité de traitement (40) présentant l'au moins une sonde de température de l'habitacle (26) et recevant des signaux de mesure d'au moins quelques-uns des premiers capteurs (28, 30) du système de chauffage, ventilation et/ou climatisation, et poursuivant le traitement de ces signaux de mesure ainsi que des signaux de mesure de l'au moins une sonde de température de l'habitacle (26) pour les transformer en signaux de commande de climatisation que reçoit l'unité de commande et de pilotage (32) afin de piloter le ventilateur (14), les servomoteurs (22) et/ou le groupe de chauffage et/ou de refroidissement (16, 18), ou que reçoit l'unité de commande et de pilotage (32) pour la poursuite du traitement afin de piloter le ventilateur (14), les servomoteurs (22) et/ou le groupe de chauffage et/ou de refroidissement (16, 18) du système de chauffage, ventilation et/ou climatisation.

2. Dispositif selon la revendication 1, **caractérisé en ce que** les premiers capteurs (28, 30) sont raccordés à l'unité de commande et de pilotage (32) et fournissent leurs signaux de mesure à cette unité, l'unité de commande et de pilotage (32) fournissant à l'unité de traitement (40) ces données représentant des signaux de mesure.

3. Dispositif selon la revendication 1 ou 2, **caractérisé en ce que** l'au moins une sonde de température de l'habitacle (26) est ventilée ou **en ce que** l'au moins une sonde de température de l'habitacle (26) n'est pas ventilée et présente deux éléments de mesure sensibles à la température ainsi qu'un élément sensible au rayonnement captant un rayonnement solaire.

4. Dispositif selon l'une des revendications 1 à 3, **caractérisé en ce que** les premiers capteurs (28, 30) présentent au moins un capteur de soufflage destiné à la capture de la température de l'air s'échappant d'au moins l'une des canalisations, et/ou au moins un capteur de soleil destiné à la capture du rayonnement solaire auquel est exposé l'habitacle, et/ou au moins un capteur d'humidité destiné à la capture de l'humidité relative de l'air de l'air parvenant en particulier à une vitre, en particulier au parebrise du véhicule, et/ou au moins un capteur de température extérieure destiné à la capture de la température de l'environnement du véhicule et/ou un capteur destiné à la capture de la température d'un groupe de chauffage du système de climatisation, et/ou un capteur destiné à la capture de la température d'un groupe de refroidissement du système de climatisation.

5. Unité de sonde de température de l'habitacle pour un système de chauffage, ventilation et/ou climatisation d'un véhicule, qui comporte un dispositif destiné au pilotage et au fonctionnement du système ainsi que d'un système d'actionneurs, avec
- au moins une et de préférence plusieurs sondes de température de l'habitacle (26) destinées à la détermination d'une grandeur représentant la température de l'habitacle du véhicule (10), et
- avec une unité de traitement (40), disposée à l'extérieur de et séparément du dispositif de pilotage et de fonctionnement du système de chauffage, ventilation et/ou climatisation, et qui présente l'au moins une sonde de température de l'habitacle (26) et reçoit des signaux de mesure de la ou des sondes de température de l'habitacle (26), ainsi que des signaux de mesure d'autres capteurs (28, 30) du système de chauffage, ventilation et/ou climatisation, et qui fournit des signaux pour le pilotage du système d'actionneurs du système de chauffage, ventilation et/ou climatisation pour la transmission au dispositif de pilotage et de fonctionnement du système de chauffage, ventilation et/ou climatisation à des fins de pilotage du système d'actionneurs du système de chauffage, ventilation et/ou climatisation, l'unité de commande et de pilotage (32) pilotant, en plus de ce système d'actionneurs, également d'autres composants de véhicule que le système de chauffage, ventilation et/ou climatisation du véhicule.

6. Unité de sonde de température de l'habitacle selon la revendication 5, **caractérisée en ce que** l'au moins une sonde de température de l'habitacle (26) est ventilée ou **en ce que** l'au moins une sonde de température de l'habitacle (26) n'est pas ventilée et présente deux éléments de mesure sensibles à la température ainsi qu'un élément sensible au rayonnement captant le rayonnement du soleil.
